## Europäisches Patentamt

## European Patent Office

## Office européen des brevets

(19)

(11) Veröffentlichungsnummer: **0 226 935**
**B1**

(12)

# EUROPÄISCHE PATENTSCHRIFT

(45) Veröffentlichungstag der Patentschrift:
23.05.90

(51) Int. Cl.⁵: **B01J 3/02**

(21) Anmeldenummer: 86117119.7

(22) Anmeldetag: 09.12.86

(54) Dosiervorrichtung zum regelbaren Einbringen von rieselfähigen, pulverförmigen Stoffen in unter Druck stehende Räume.

(30) Priorität: 19.12.85 DE 3544915

(43) Veröffentlichungstag der Anmeldung:
01.07.87 Patentblatt 87/27

(45) Bekanntmachung des Hinweises auf die Patenterteilung:
23.05.90 Patentblatt 90/21

(84) Benannte Vertragsstaaten:
AT BE DE ES GB GR IT SE

(56) Entgegenhaltungen:
DE-A- 2 934 817
DE-B- 2 062 513
FR-A- 1 299 568

CHEMIE INGENIEUR TECHNIK, Band 56, Nr. 10, Oktober 1984, Seiten 755-768, Verlag Chemie GmbH, Weinheim, DE; W. STAHL et al.: "Systeme zum Ein- oder Austrag von Schüttgütern in oder aus Druckräumen"
CHEMIE INGENIEUR TECHNIK, Band 57, Nr. 5, Mai 1985, Seiten 395-406, VCH Verlagsgesellschaft mbH, Weinheim, DE; G. VETTER: "Dosieren von festen und fluiden Stoffen"

(73) Patentinhaber: BASF Aktiengesellschaft,
Carl-Bosch-Strasse 38, D-6700 Ludwigshafen(DE)

(72) Erfinder: Zentgraf, Ernst, Tilsiter Strasse 65,
D-6703 Limburgerhof(DE)
Erfinder: Vogt, Heinz, Dr., Pranckhstrasse 30,
D-6700 Ludwigshafen(DE)
Erfinder: Brandstetter, Franz, Dr., Ritterbueschel 45,
D-6730 Neustadt(DE)

## Beschreibung

Die Erfindung betrifft eine Dosiervorrichtung zum regelbaren Einbringen von rieselfähigen, pulverförmigen Stoffen in unter Druck stehende Räume.

Die vorgegebene Dosiervorrichtung soll eine über lange Zeiträume störungsfreie Zugabe von rieselfähigen, pulverförmigen Stoffen, speziell Katalysatoren, in unter Druck stehende Räume gewährleisten.

Die Katalysatordosierung mittels in der Praxis verwendeten Dosiervorrichtungen läßt sich in drei Verfahrensschritte unterteilen, nämlich Katalysator bevorraten, Katalysator portionieren und Katalysator in unter Druck stehende Reaktionsräume befördern. Um Schädigungen der Katalysatoren durch Katalysatorgifte bzw. Klumpenbildung durch vorzeitige Polymerisation zu vermeiden, wird der Katalysatorvorrat mit Inertgas abgedeckt. Zur Mengenregulierung des Katalysators entnimmt man aus dem Katalysatorvorrat eine - durch geometrisch vorgegebene Volumina - festgelegte Katalysatormenge, die anschließend in den unter Druck stehenden Reaktionsraum gefördert wird.

Dazu notwendige Vorrichtungen sind bekannt, und auch in der Literartur beschrieben.

Beispielhaft sollen vier Ausführungen - beschrieben in vier Druckschriften - vorgestellt werden:

DE-B 11 75 653 (I): Vorrichtung zum diskontinuierlichen Dosieren von pulverförmigen Stoffen, wobei die Dosierung in den unter Druck stehenden Raum mittels einer oszillierenden, horizontal bewegten Schubstange mit einer Querbohrung erreicht wird.

DE-B 20 62 513 (II): Dosiervorrichtung zum Dosieren von Pulvern, wobei die Dosierung in den unter Druck stehenden Raum mittels eines oszillierenden, vertikal bewegten Kolbenschiebers mit einer Einschnürung erreicht wird.

DE-A 29 34 817 (III): Dosiervorrichtung zum regelbaren Einbringen von Feststoffen in Druckräume, wobei die Dosierung in den unter Druck stehenden Raum mittels eines rotierenden, horizontal angeordneten Kegelstumpfes, auf dessen Manteloberfläche Vertiefungen eingebracht sind, erreicht wird.

DE-B 22 64 412 (IV): In dieser Schrift ist eine Vorrichtung beschrieben, mittels der der Katalysator aus einer Mitnahmekammer als Dispersion oder Suspension in das Fördergas abgegeben wird, das dann nach Art einer pneumatischen Förderung über ein Kapillarrohr in den Reaktionsraum gelangt.

Diese beschriebenen Ausführungen haden jedoch Nachteile, die nachstehend beschrieben sind.

Bei den Ausführungen gemäß den Druckschriften I, II und III wird als Transportmedium für den Katalysator Reaktionsgas verwendet. Obwohl in den jeweiligen Transportleitungen extrem hohe Gasgeschwindigkeiten vorliegen, kommt es immer wieder durch vorzeitige Polymerisation in den Transportleitungen zu Verstopfungen in denselben. Diese Verstopfungen haben häufig nur kurze Standzeiten der beschriebenen Dosiervorrichtungen zur Folge mit all den damit nachfolgenden Schwierigkeiten wie Abstellen der Anlage, Reinigen der Dosiervorrichtungen etc.

In den Ausführungen gemäß der Druckschrift IV werden die oben genannten Schwierigkeiten dadurch vermieden, daß für den Katalysatortransport Inertgas verwendet wird. Dieses Fördergas muß jedoch ständig mit hoher Geschwindigkeit durch ein enges Kapillarrohr strömen. Von großem Nachteil ist bei dieser Ausführung, daß geringste Katalysatoragglomerate oder Überkörner zu Verstopfungen führen, die letztendlich dieselben Schwierigkeiten - wie oben beschrieben - zur Folge haben. Als weiterer Nachteil wird bei dieser Ausführung eine große Menge Inertgas in den Reaktionsraum eingeschleust.

Der Erfindung liegt daher die Aufgabe zugrunde, die mittels geometrisch vorgegebener Volumina festgelegte Katalysatormenge ohne Verstopfungsgefahr in den unter Druck stehenden Reaktionsraum zu fördern, und gleichzeitig die in den Reaktionsraum eingeschleuste Inertgasmenge möglichst gering zu halten.

Diese Aufgabe wird bei einer gattungsgemäßen Dosiervorrichtung durch die kennzeichnenden Merkmale des Anspruchs 1 gelöst.

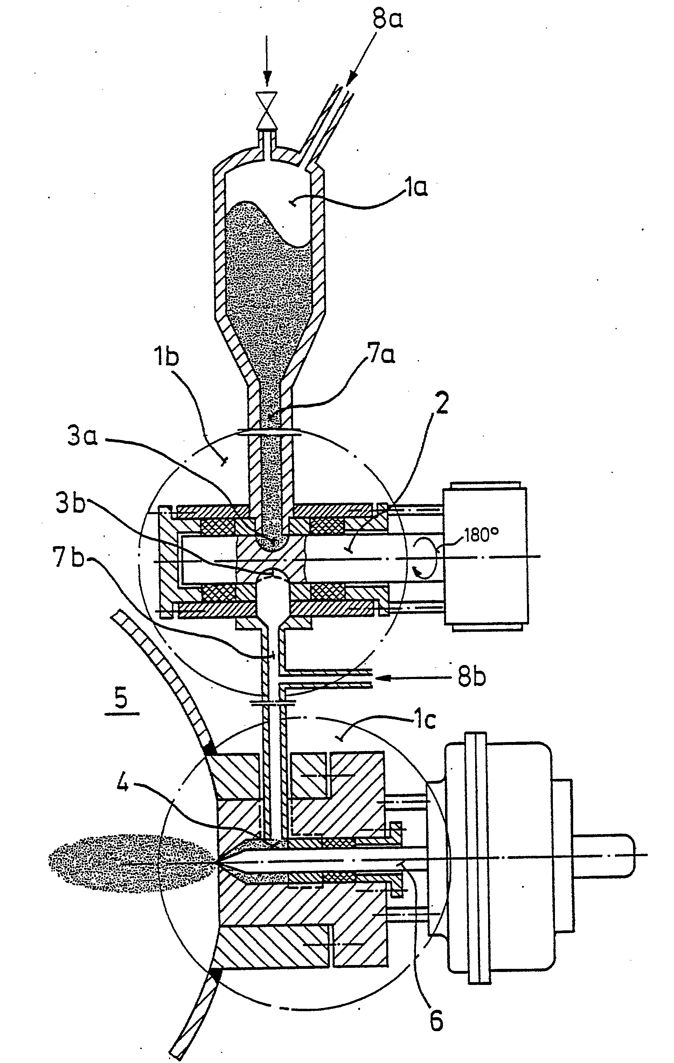

Ein Ausführungsbeispiel der Erfindung ist in der Zeichnung dargestellt und wird im folgenden näher beschrieben. Die Zeichnung zeigt einen Schnitt durch die erfindungsgemäße Dosiervorrichtung. Die Dosiervorrichtung besteht aus den Elementen Bevorratungseinheit 1a, Portioniereinheit 1b und Abschlußeinheit 1c. Die Portioniereinheit bildet eine in einem Gehäuse mittels Dichtringe und Stopfbuchsen abgedichtete, alternierend jeweils um 180°C drehbare Welle 2, die mit zwei gegenüberlie genden Vertiefungen 3a und 3b versehen ist. Die alternierende Bewegung erfolgt mittels eines Antriebs. Die Abschlußeinheit bildet ein durch Dichtringe und Stopfbuchse abgedichteter zylindrischer - den zu dosierenden Katalysator aufnehmenden - Hohlraum 4, der gegen den unter Druck stehenden Raum-Reaktionsraum 5 düsenförmig zuläuft. In diesem Hohlraum ist eine mit dem Hohlraum und dem düsenförmigen Zulauf mittengleich gelagerte Spindel 6 angeordnet, die mittels eines Antriebes hubförmig hin- und her bewegbar ist, wobei die Spindel in der einen Nullage die Düse absolut gasdicht gegen den Reaktionsraum abschließt. Zwischen Bevorratungseinheit 1a und Portioniereinheit 1b einerseits und Portioniereinheit 1b und Abschlußeinheit 1c andererseits befinden sich Verbindungleitungen 7a und 7b. Bevorratungseinheit und Verbindungsleitung 7b sind mit Leitungsanschlüssen 8a und 8b für Inertgas ausgerüstet, dessen Druck höher als der Druck im Reaktionsraum ist, wobei dieser Druck in seiner absoluten Höhe verstellbar ist.

Aus verfahrenstechnischen Gründen ist es wichtig, daß die Abschlußeinheit 1c bündig mit der Wand des Reaktionsraumes 5 abschließt, damit sich im Reaktionsraum keine Totzone bilden kann, in der sich Katalysatorpartikel festsetzen können. Durch diesen bündigen Einbau der Abschlußeinheit in den Reaktionsraum ist gewährleistet, daß sich an dem Düsenaustritt keine Katalysatorpartikel festsetzen können, da der Düsenaustritt stets mit Reaktionsgas umströmt ist.

Nachstehend wird die Dosierung des Katalysators in den unter Druck stehenden Reaktionsraum beschrieben. Aus der Bevorratungseinheit wird über die Portioniereinheit - entsprechend der Größe der Vertiefungen in der Welle und der Hubzahl der Welle - pro Zeiteinheit eine bestimmte Menge Katalysator der Abschlußeinheit zugeführt. Die Öffnungszeit der hubförmig hin- und her bewegten Spindel ist mittels eines Zeitsteuergerätes zu bemessen, daß genau die pro Zeiteinheit aus der Portioniereinheit anfallende Katalysatormenge in den Reaktionsraum "geschossen wird". Hierbei entspannt sich das Inertgas in den Reaktzionsraum.

Die mit der Erfindung erzielten Vorteile liegen insbesondere darin, daß mit der erfindungsgemäßen Vorrichtung einerseits sehr lange Standzeiten erreicht werden konnten, und andererseits die Inertgasmenge, die in den Reaktionsraum eingeschleust wird, deutlich verringert werden konnte.

## Patentanspruch

Dosiervorrichtung zum regelbaren Einbringen von rieselfähigen, pulverförmigen Stoffen in unter Druck stehende Räume, enthaltend
- eine Bevorratungseinheit 1a
- eine Portioniereinheit 1b, bestehend aus einer in einem Gehäuse mittels Dichtringen und Stopfbuchsen abgedichteten, alternierend jeweils um 180°C drehbaren Welle 2, die mit zwei gegenüberliegenden Vertiefungen 3a, 3b, jeweils für Befüllung und Entleerung des Stoffes, versehen ist,
- eine Abschlußeinheit 1c, bestehend aus einem mittels Dichtringen und Stopfbuchse abgedichteten zylindrischen Hohlraum 4, der gegen den unter Druck stehenden Raum 5 düsenförmig zuläuft, und einer mittengleich zu dem Hohlraum angeordneten Spindel 6, die hubförmig hin- und her bewegbar ist, und an ihrer Spitze eine korrespondierende Steigung zu dem düsenförmigen Zulauf aufweist, und wobei die Abschlußeinheit bündig an die Wand des Raumes 5 angeordnet ist,
- eine Verbindungsleitung 7a zwischen Bevorratungseinheit und Vertiefung 3a für Befüllung innerhalb der Portioniereinheit,
- eine Verbindungsleitung 7b zwischen Vertiefung 3b für Entleerung innerhalb der Portioniereinheit und dem Hohlraum der Abschlußeinheit,
- zwei Anschlüsse für Inertgas von denen der eine Anschluß 8a an die Bevorratungseinheit und der andere Anschluß 8b an die Verbindungsleitung 7b angeschlossen ist.

## Claim

Metering apparatus for introducing a free-flowing, powdered substance in a controlled manner into a space under pressure, containing a storing unit 1a, a proportioning unit 1b consisting of a shaft 2 which is sealed in a housing by means of sealing rings and glands, can be rotated alternately through 180° in each case and is provided with two depressions 3a, 3b opposite one another, for accepting and discharging the substance respectively, an end unit 1c consisting of a cylindrical cavity 4, which is sealed by means of sealing rings and glands and has a nozzle-like shape toward the space 5 under pressure, and a spindle 6 which is arranged concentrically with respect to the cavity, is capable of making to and fro stroke-like movements and, at its tip, has a slope corresponding to that of the nozzle-like feed, the end unit being arranged flush with the wall of the space 5,
a connecting line 7a between the storing unit and the accepting depression 3a within the proportioning unit, a connecting line 7b between the discharging depression 3b within the proportioning unit and the cavity of the end unit, and two connections for inert gas, the one connection 8a being connected to the storing unit and the other connection 8b being connected to the connecting line 7b.

## Revendication

Appareil de dosage pour l'introduction réglable de matières pulvérulentes fluides dans des enceintes sous pression, comportant
- un élément de stockage (1a),
- un élément de production de portions (1b) constitué d'un arbre (2) à rotation alternative de 180 monté dans un corps avec des joints annulaires et des presse-étoupe et pourvu de deux creux opposés (3a, 3b) destinés à être remplis de matière et vidés,
- un élément d'obturation (1c) constitué d'une cavité cylindrique (4) obturée par des joints annulaires et par un presse-étoupe et se terminant en forme de buse vers l'enceinte sous pression (5), et d'une tige (6) à mouvement de va-et-vient placée coaxialement à cette cavité et ayant à son extrémité une conicité correspondant à la terminaison en forme de buse, cet élément d'obturation étant placé au ras de la paroi de l'enceinte (5),
- une conduite de liaison (7a) entre l'élément de stockage et le creux à remplir (3a) de l'élément de production de portions,
- une conduite de liaison (7b) entre le creux à vider (3b) de l'élément de production de portions et la cavité de l'élément d'obturation, et
- deux branchements de gaz inerte prévus l'un (8a) sur l'élément de stockage et l'autre (8b) sur la conduite de liaison (7b).

8a

1a

1b

7a

2

3a

3b

180°

7b

8b

5

1c

4

6